# EUROPEAN PATENT SPECIFICATION

(11) **EP 3 554 228 B1**
(45) Date of publication and mention of the grant of the patent: **11.11.2020**
(21) Application number: 17817935.4
(22) Date of filing: 12.12.2017
(51) Int. Cl.: A01K 11/00, A01K 1/00, A01K 5/02, A01K 29/00

(54) **CONTROL UNIT AND SYSTEM TO GROUP FEED ANIMALS**
STEUEREINHEIT UND SYSTEM ZUR GRUPPENFÜTTERUNG VON TIEREN
UNITÉ DE COMMANDE ET SYSTÈME POUR REGROUPER DES ANIMAUX D'ALIMENTATION

(30) Priority: 13.12.2016 SE 1651639
(43) Date of publication of application: 23.10.2019
(73) Proprietor: DeLaval Holding AB, 147 21 Tumba (SE)
(72) Inventor: LIAO, Bohao, 147 21 Tumba (SE); HALLÉN SANDGREN, Charlotte, 147 21 Tumba (SE); ROSENBERG, Henrik, 147 21 Tumba (SE); SCHULTE, Klaus, 147 21 Tumba (SE)
(74) Representative: Lilliehorn, Tobias
(86) International application number: PCT/SE2017/051256
(87) International publication number: WO 2018/111180

(56) References cited:
- WO-A1-2008/123820
- WO-A1-2010/023056
- WO-A1-2010/063527
- Marilyn Krukowski: "Automatic Determination of Body Condition Score of Dairy Cows from 3D Images", Master's Thesis in Computer Science, ISSN: 1653-5715, 26 January 2009 (2009-01-26), pages 1-89, XP055051333, KTH, Stockholm, Sweden, http://www.csc.kth.se Retrieved from the Internet: URL:http://www.nada.kth.se/utbildning/gruk th/exjobb/rapportlistor/2009/rapporter09/k rukowski_marilyn_09009.pdf [retrieved on 2013-01-28]

## Description

### TECHNICAL FIELD

This specification discloses a control unit and a system. More particularly, a control unit and a system are described, to group feed animals in a herd where the animals are kept in different feeding groups based on an estimated energy need of the animals, and where each respective feeding group is provided with feed having different energy content.

### BACKGROUND

On a dairy farm, it is very important that animals, such as e.g. cows, are provided with the correct amount of feed in order to achieve a correct Body Condition Score (BCS). Animals having a deviating BCS at calving are more prone to an array of disturbances regarding milk production, and also health and fertility. Particularly fat cows having a high BCS are very vulnerable for post calving diseases, which affects milk yield of the animal.

Further, different individual animals have different energy needs due to differences in metabolism, size, milk yield, age, parity, breed, genetic variations, etc. Thus, all animals in a herd cannot be given the same amount of feed. However, to continuously calculate and determine the correct amount of feed for each animal in a herd is complicated and time consuming.

Metabolic diseases and fertility disturbances are commonly abundant and extremely costly for the dairy production. Besides health issues, it is expensive to overfeed an animal.

Yet another problem related to feeding, in scenarios where the animals are not tied up, is that some animals may not be able to assimilate the feed. This may have a multitude of reasons such as low ranking of the animal, allergy for certain feeds, dislike of certain feeds, etc.

Another problem is that some animals incite each other to compulsive overeating, leading to an excessive BCS.

Visual inspection of each animal at the farm may be made by the farmer, watching for animals having a deviating BCS, or weight. Such identified animal may be provided with more/ less food e.g. by changing feed group, and/ or by being provided with a feed additive. However, manual observations by the farmer are time consuming. It would be desired to reduce the working time spent on this daily routine, as it multiplies over time.

WO 2010/023056 A1 discloses a control unit according to the preamble of claim 1 configured to group feed animals in a herd where the animals are kept in different feeding groups based on an estimated energy need of the animals.

### SUMMARY

It is therefore an object of this invention to solve at least some of the above problems and facilitate group feeding of animals in a herd.

According to a first aspect of the invention, this objective is achieved by a control unit according to claim 1 configured to group feed animals in a herd where the animals are kept in different feeding groups based on an estimated energy need of the animals, and where each respective feeding group is provided with feed having different energy content. The control unit is configured to identify an animal in a first feeding group. Further, the control unit is configured to determine BCS of the identified animal. Additionally, the control unit is configured to define a position, in a lactation cycle, of the identified animal. The control unit is further configured to compare the determined BCS of the identified animal with a reference value corresponding to the defined position in the lactation cycle. The control unit is furthermore also configured to confirm that the animal is able to assimilate the feed and is kept in the correct feeding group when the determined BCS of the animal is within an interval, defined by the reference value minus a first margin and the reference value in addition to a second margin.

According to a second aspect but not according to the invention, this objective is achieved by a method executed in a control unit to group feed animals in a herd where the animals are kept in different feeding groups, based on an estimated energy need of the animals, and where each respective feeding group is provided with feed having different energy content. The method comprises identifying an animal in a first feeding group. Further the method also comprises determining BCS of the identified animal. Additionally, the method further comprises defining a position, in a lactation cycle, of the identified animal. The method comprises comparing the determined BCS of the identified animal with a reference value corresponding to the defined position in the lactation cycle. Furthermore, the method comprises confirming that the animal is able to assimilate the feed and is kept in the correct feeding group when the determined BCS of the animal is within an interval, defined by the reference value minus a first margin and the reference value in addition to a second margin.

According to a third aspect of the invention, this objective is achieved by a system 1 according to claim 13 to group feed animals in a herd where the animals are kept in different feeding groups based on an estimated energy need of the animals, and where each respective feeding group is provided with feed having different energy content. The system comprises a control unit according to the first aspect. Further the system also comprises an identification unit comprising a unique identification of the animal. The system also comprises a camera, configured to capture an image and send the captured image to the control unit.

Thanks to the described aspects, by obtaining the BCS estimate of the animal from the BCS device automatically, a continuous monitoring of the BCS of the animal may be made. By computing the reference value based on the lactation cycle of the animal, a relevant comparison may be made with the reference value. Thereby, a confirmation is achieved, verifying that the animal is able to assimilate the feed of the feeding group. By detecting at an early stage that the animal is provided with a correct nutrition content/ amount, various health problems such as overweight/ underweight, that may affect milk yield, may be avoided.

By being able to provide an optimal amount of energy to each animal, or at least energy within an optimal energy interval, overfeeding is avoided which saves money. Also, milk yield is optimised. Further, thanks to the autonomy of the provided system and method, working time of the farmer is saved. Thereby group feeding management of animals is facilitated. Other advantages and additional novel features will become apparent from the subsequent detailed description.

### FIGURES

Embodiments of the invention will now be described in further detail with reference to the accompanying figures, in which:
- **Figure 1**: illustrates an example of a system to group feed animals, according to an embodiment of the invention;
- **Figure 2**: illustrates an example of lactation curve/ BCS variance of an animal;
- **Figure 3**: is a flow chart illustrating an embodiment of a method;
- **Figure 4**: is an illustration depicting a system according to an embodiment.

### DETAILED DESCRIPTION

Embodiments of the invention described herein are defined as a control unit and a system, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

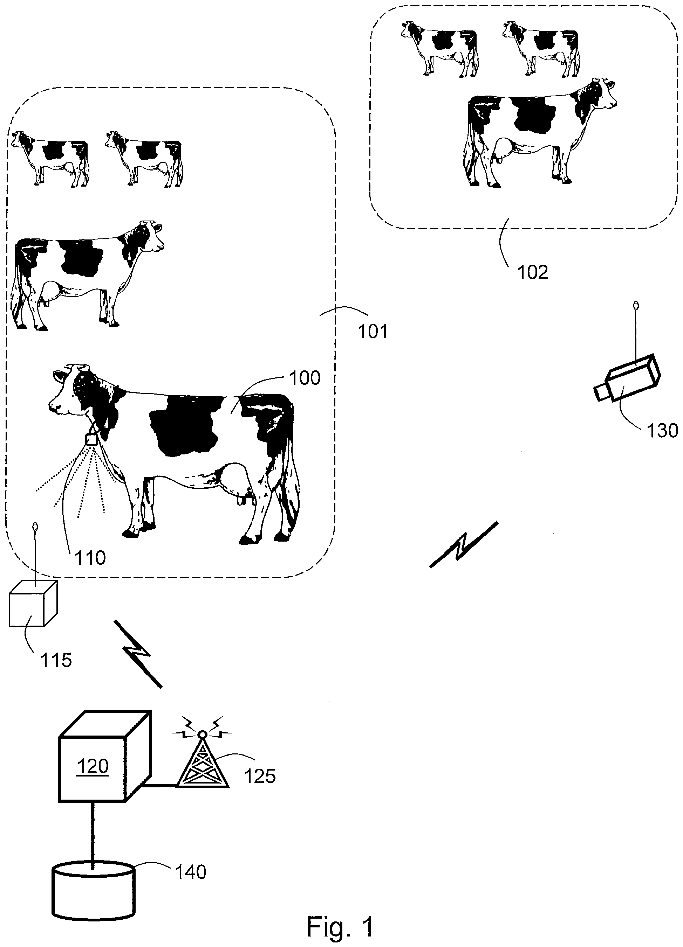

**Figure 1** illustrates a scenario with an animal **100** which may be comprised in a herd of animals at a dairy farm.

"Animal" may be any arbitrary type of domesticated animal; however, the herein provided non-limiting examples primarily relates to milk and/ or meat producing animals such as cow, goat, sheep, camel, dairy buffalo, yak, etc.

The animal 100 is situated in a first feeding group **101.** The farm in this non-limiting example also comprises another feeding group **102.** However, the farm may comprise another number of feeding groups, such as 3, 4, 5, 6, 7, etc.

A typical setting of feeding groups may be between 5-8 or there about. Each respective feeding group 101, 102 is provided with feed having different energy content. The animal 100 may thus be moved between different feeding groups 101, 102, depending on energy need of the animal 100. An example of feed group division may be e.g. high productive dairy animals, low productivity animals, low rank animals, dry off animals and sick animals, for example. Another example of feed group division may be fresh animals, high producing older animals, high production first calf heifers, and animals with low or excess body condition. Afresh animal is an animal recently calved and still in their first flush of lactation, that is within 2 weeks, possibly 4 weeks since calving.

Further the feed of the respective feeding groups 101, 102 may comprise Total Mixed Ration (TMR) in some embodiments, and Partially Mixed Ration (PMR) in some embodiments.

TMR may be defined as, "the practice of blending all feedstuffs into a complete ration which provides adequate nourishment to meet the energy needs of animals". In TMR, all forages such as silage, maize, corn, grains, protein supplements, minerals, vitamins etc., are thoroughly mixed. The energy content in the feed provided to each respective feed group 101, 102 is different and it is assumed that each animal 100 in each respective feed group 101, 102 is eating about the same amount of feed. Further, in some embodiments, the energy content of the feed may be analysed in real time in order to assure that the animals in the feed group 101, 102 is provided feed with appropriate energy content.

In PMR, the animals 100 are provided with a basic mixture of feed ingredients, often only forage, provided to all animals in the feed group 101, 102; and on top, an individual amount of high nutrient value food, such as concentrate, minerals or vitamins is provided.

Also in PMR, it is assumed that all animals 100 in the feed group 101, 102 eat about the same amount of feed from the basic mixture. However, this is not always true as some animals are bigger and more dominant and therefore pushes aside less developed animals from the feeding area. Animals of the latter kind may be referred to as low rank animals. This problem will later be further discussed.

The feed of the feeding groups 101, 102 may further comprise pasture and the feeding groups 101, 102 may be kept in different fenced areas.

The animal 100 may have an identification device **110** attached to the animal 100 in some embodiments, e.g. in a necklace around the neck of the animal 100, under the hide of the animal 100, as ear tag/-s, around the tail of the animal 100 and/ or around any, some or all of the legs of the animal 100, etc.

The identification device 110 may comprise a transponder in some embodiments. The transponder of the identification device 110 may be recognised by a reader **115.** The communication between the identification device 110 and the reader 115 may be made e.g. over a short range wireless signal such as Radio-Frequency Identification (RFID), Bluetooth, ZigBee, infrared transmission, Wi-Fi, Light Fidelity (Li-Fi), ANT+, Near Field Communication (NFC), Z-Wave, Wireless Universal Serial Bus (Wireless USB), etc.

The reader 115 may then provide an identity of the animal 100 to a control unit **120,** over a wired or wireless communication interface.

A camera **130,** such as a BCS device, may capture an image of the animal 100 and automatically derive a BCS estimate of the animal 100 based on a three-dimensional image of parts of the animal 100. Thereby, in depth images of the animal 100 may be captured. In some embodiments, the camera 130 may also determine a time period and associate a time stamp with the determined BCS estimate. The camera 130 may comprise e.g. a camera, a video camera, a stereo camera, a time-of flight camera or similar entity.

In order to capture the image of the animal 100, the camera 130 may be mounted in a ceiling of the barn, or on an elevated structure in the barn, in order to capture images from behind/ above the animal 100. The camera 130 may be situated at a location in the barn where the animal 100 may be identified by the identification device 110/ reader 115, without being mistaken for another animal, e.g. at a feeding station, a milking station or the like in different embodiments.

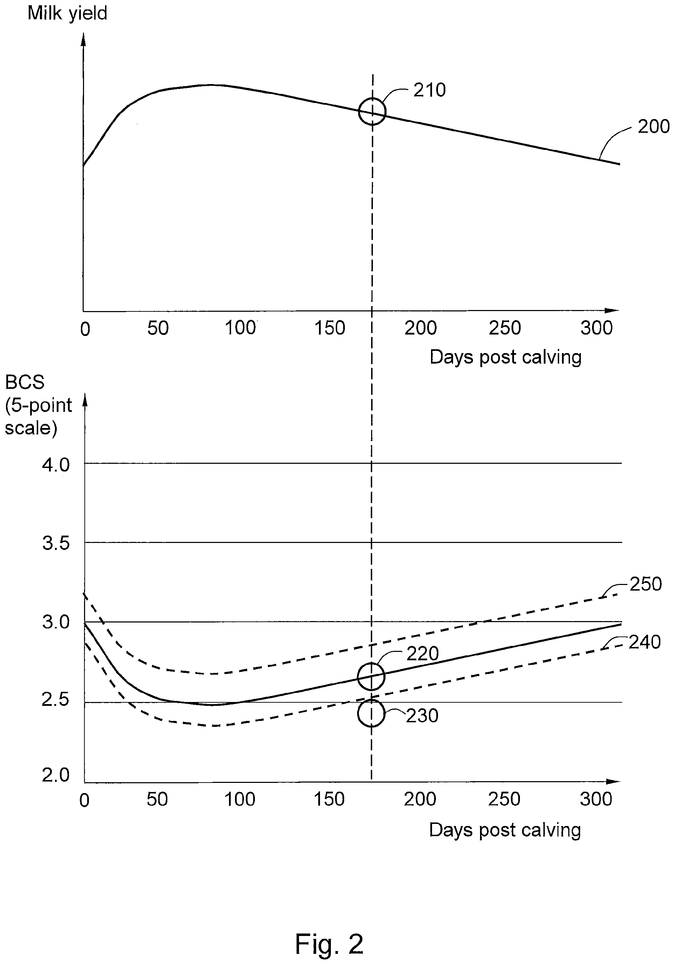

BCS is a measurement describing the relative fatness or body condition of an animal such as a cow, through the use of a scale, as illustrated in **Figure 2** and further discussed in the corresponding description segment.

In some embodiments, the identification device 110 may comprise an identification number, which may be recognised by the camera 130, or possibly a separate camera, in cooperation with an image recognition program. In some further embodiments, the identification device 110 may comprise the identification number encoded in a graphic encoding such as e.g. barcode, European Article Number (EAN) code, data matrix, Quick Response (QR) code. The reader 115 may then comprise a scanner in some embodiments. Alternatively, the camera 130 may recognise the graphic encoding in cooperation with the image recognition program.

In some alternative embodiments, the animals 100 may be identified by iris scanning, which may be performed by the reader 115.

In yet some embodiments, the animal 100 may be identified based on the pattern of markings in the animal skin, as determined by the camera 130 (or another camera) and a comparison made with a register over pre-stored patterns of animals in the herd.

The control unit 120 may repeatedly obtain information from various sources and sensors in the barn wherein the animals 100 are kept, including the identification device 110, the reader 115 and/ or the camera 130, possibly together with a time stamp. It thereby becomes easy to match animal identification obtained from the reader 115, with images of the animal 100, captured by the camera 130. This information may be stored in a database **140** in some embodiments. Various measured data associated with the animal 100, and possibly all animals of the herd may thus be continuously stored, e.g. associated with a time stamp in the database 140.

The database 140 may further comprise information concerning the lactation cycle of the identified animal 100.

The BCS estimate may then be compared by the control unit 120, with a reference value, or threshold limit. The reference value is selected, dependent on the defined position in the lactation cycle of the identified animal 100.

The database 140 may in addition comprise information concerning breed, parity, milk yield and/ or genetic milk yield potential of the animal 100. Based there upon, the control unit 120 determine the reference value at different moments in time.

Further, the control unit 120 is configured to decide to let the animal 100 change feeding group 101, 102, to a feeding group provided with feed having a higher energy content than the feed of the first feeding group 101, when the determined BCS of the animal 100 is lower than the reference value minus a first margin; or to put the animal 100 in a feeding group 101, 102 provided with feed having a lower energy content than the first feeding group 101, when the determined BCS of the animal 100 is higher than the reference value in addition to a second margin.

The reason for using the first and second margins is to ensure that animals are not transferred back and forth in vain between different feeding groups 101, 102.

Thereby, by placing the animal 100 in the correct feeding group 101, 102, provided with feed having an energy content corresponding to the energy need of the animal 100, a correct BCS of the animal 100 is achieved, leading to enhanced milk yield and reduced food costs, as overfeeding is avoided.

Further, the control unit 120 is connected to a transceiver **125,** configured to transmit and receive wireless signals to/ from the identification device 110, the reader 115, the camera 130 and/ or the feed station 150.

Such wireless communication interface may comprise, or at least be inspired by wireless communication technology such as Wi-Fi, Wireless Local Area Network (WLAN), Ultra Mobile Broadband (UMB), Bluetooth (BT) to name but a few possible examples of wireless communications in some embodiments. The communication may alternatively be made over a wireless interface comprising, or at least being inspired by radio access technologies such as e.g. 3GPP LTE, LTE-Advanced, E-UTRAN, UMTS, GSM, GSM/ EDGE, WCD-MA, Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mo-bile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), or similar, just to mention some few options, via a wireless communication network.

The communication between the reader 115, the camera 130 and/ or the feed station 150 and the control unit 120 may alternatively be made over a wired connection.

The control unit 120 may be comprised in a portable entity such as a mobile cellular telephone, a portable computing device, a pair of intelligent glasses, a smart contact lens, an augmented reality device, a smart watch or similar device having a user interface and wireless communication ability.

The control unit 120 may be carried by a human such as e.g. a farmer or other person working at a farm; or a veterinarian, agronomist, dietician, biologist, zoologist, ecologist, mammologist, domestic animal researcher, zookeeper or other similar human, temporarily or permanently visiting the farm. The "farm" as herein used may be a barn, a ranch, a stable or other similar agricultural structure or area for keeping animals.

In some embodiments, the functionalities of the control unit 120 may be comprised in an application software (app) and downloaded to the portable entity of the farmer.

In some embodiments, the farmer or a group feeding manager may be alerted when it has been decided to let the animal 100 change feeding group 101, 102, e.g. by an alert transmitted from the control unit 120 to a portable electronic device of the farmer/ group feeding manager.

However, it may be very traumatic for the animal 100 to change feeding group 101, 102 all alone. The other animals in the receiving feeding group 101, 102 may greet the newly arrived animal 100 with great suspicion, not to say hostility. The animals already comprised in the other feeding group 102 have elaborated a stable social ranking system, which may be challenged when a new player enters the scene. The newly arrived animal 100 may thus be regarded as a low rank animal in the other feeding group 102, which may lead to problems for her, getting enough food.

A possible solution to this problem in some embodiments, may be to let the animal 100 change feeding group 101, 102 when a plurality of animals 100 has been decided to change feeding group 101, 102 into the decided feeding group.

Furthermore, the temperature in an area housing the first feeding group 101 may be adjusted in some embodiments, based on determined BCS of a plurality of animals 100 of the first feeding group 101. Thereby, by lowering the temperature in the area of the first feeding group 101, the animals in the first feeding group 101 may assimilate the provided feed better.

**Figure 2** illustrates a lactation curve and BCS of an animal 100 and how the BCS varies over time.

Various scales have been developed for BCS, such as a 5 point scale, a 6 point scale, an 8 point scale, a 9 point scale, a 10 point scale, etc. The herein described BCS is primarily using the 5 point scale in a non-limiting example. A BCS 1 animal is extremely thin while a BCS 5 animal is obese.

BCS is a one management tool that can be used to predict herd fertility and to determine feeding programs throughout the year. Female animals that are too thin or too fat can be an expensive investment. Thin animals can have difficulty rebreeding, while fat animals are prone to calving problems and excessive feed costs.

The BCS estimate **230** typically vary over the pregnancy time of the animal 100, reaching it maximum just before calving and its minimum or nadir at about 40-100 days after calving. The BCS curve may be regarded as a mirror of a lactation curve of the animal 100.

Traditionally, BCS 230 may be estimated by human scorers, based on visual inspection. However, the camera 130 is enabled to make a BCS estimate 230 with high accuracy. The camera 130 may capture a three-dimensional image of the animal's lower back and based on image recognition/ computer vision and object recognition, BCS 230 of the animal 100 may be estimated.

A phenomenon which sometimes occur within feed groups 101, 102, is that some (dominant) animals seem to trigger each other to compulsive overeating, leading to an excessive BCS 230. These animals are thus becoming overfed, while other animals in the same feed group may not get enough food. An advantage by detecting animals having an excessive BCS 230 and separating them is that overfeeding of the involved animals is avoided, but also that other animals in the feed group may get opportunity to eat more feed. Compulsive overeating may also lead to various other health problems and thereby decreased milk yield.

A position **210** in the lactation cycle **200** of the animal 100 may be defined. Thereafter, a reference value **220** corresponding to the defined position 210 in the lactation cycle 200.

The BCS estimate 230 which is determined by the camera 130 may then be compared with the reference value 220.

Based on the made comparison, the control unit 120 may confirm that the animal 100 is able to assimilate the feed and is kept in the correct feeding group 101, when the BCS estimate 230 is kept within an interval between the reference value 220 minus a first margin **240,** and the reference value 220 in addition to a second margin **250.**

The first margin 240 and the second margin 250 may be set to identical, or distinct values in different embodiments. For example, the respective margins 240, 250 may be set to a respective percentage of the reference value 220, such as e.g. 5%, 10%, etc., in some non-limiting examples.

In some embodiments, the control unit 120 may decide to let the animal 100 change feeding group 101, 102. When the determined BCS 230 of the animal 100 is lower than the reference value 220 minus the first margin 240, the control unit 120 may decide to let the animal 100 change into a feeding group provided with feed having a higher energy content than the feed of the first feeding group 101. Alternatively, the control unit 120 may decide to let the animal 100 change into a feeding group provided with feed having a lower energy content than the first feeding group 101, when the determined BCS 230 of the animal 100 is higher than the reference value 220 in addition to the second margin 250.

As previously mentioned, the first and the second margins 240, 250 may serve the function of avoiding that animals are ping-ponged between different feed groups 101, 102, leading to stressful moments of the animal 100.

In some embodiments, multiple BCS 230 determinations, and multiple comparisons may be made. The result may be stored associated with the animal identity and possibly a time stamp in a computer memory such as e.g. the database 140. It may then be determined to let the animal 100 change feed group 101, 102 when the multiple comparisons result in a number of consistent outcomes. The outcome may be for example three consistent comparisons lower than the reference value 220 in a row, or five out of seven comparisons lower than the reference value, in a couple of non-limiting examples.

The control unit 120, when having made multiple comparisons, may compute a change rate between the made comparisons. In some embodiments, the computed change rate may be used for determining to let the animal 100 change feeding group 101, 102. For example, if the gap between the determined BCS 230 value and the reference value 220 is increasing, it may be interpreted as a confirmation of that the animal 100 currently is situated in an incorrect feeding group 101, 102, and an urgent group change would be advantageous. In the opposite case, when the gap between the determined BCS 230 value and the reference value 220 is decreasing, it may be determined to let the animal 100 remain in the first feed group 101, as the diminishing gap may seems to indicate that the animal 100 is in the correct feed group 101, 102.

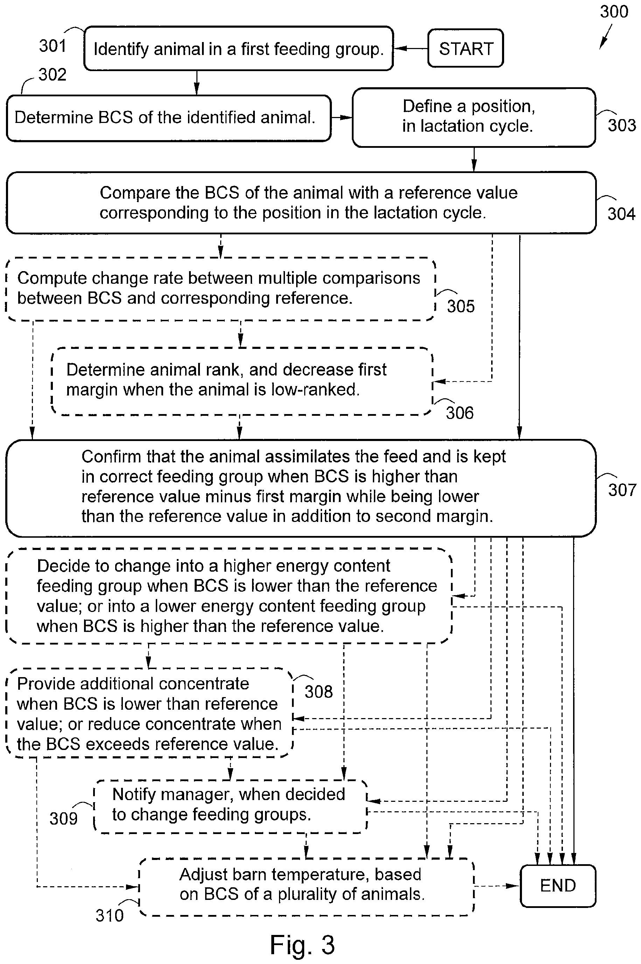

**Figure 3** illustrates an example of a method **300** according to an embodiment. The flow chart in Figure 3 shows the method 300 executed in a control unit 120 to group feed animals 100 in a herd where the animals 100 are kept in different feeding groups 101, 102. The group feeding management is based on an estimated energy need of the animals 100, and where each respective feeding group 101, 102 is provided with feed having different energy content.

The feed of the respective feeding groups 101, 102 may comprise TMR in some embodiments. In other embodiments, the feed of the respective feeding groups 101, 102 may comprise PMR. The feed may in some embodiments comprise pasture, wherein the animals of the feeding groups 101, 102 are kept in different fenced, or otherwise separated, areas.

In order to achieve a correct group feeding management, the method 300 may comprise a number of steps **301-311.** However, some of these steps 301-311 may be performed solely in some alternative embodiments, like e.g. steps 305-306 and/ or steps 308-311. Further, the described steps 301-311 may be performed in a somewhat different chronological order than the numbering suggests. The method 300 may comprise the subsequent steps:
**Step 301** comprises identifying an animal 100 in a first feeding group 101.

The animal 100 may be identified based on a signal received from an identification device 110 in some embodiments.

Identification of the animal 100 may alternatively be made by image recognition of hide spots of the animal 100, by recognition of identification number on an ear tag of the animal 100, iris scanning of the animal 100, etc.

In some embodiments, a time stamp may be determined and associated with the identity of the animal 100.

**Step 302** comprises determining BCS 230 of the identified 301 animal 100. The BCS estimate may be obtained, associated with a time stamp in some embodiments. The BCS may be determined e.g. on a 5 point scale, or other corresponding BCS scale.

The respective time stamps associated with the identity of the animal 100, and BCS of the animal 100 may assist in combining the identity of the animal 100 with the determined BCS.

**Step 303** comprises defining 303 a position 210, in a lactation cycle 200, of the identified 301 animal 100.

The position in the lactation cycle 200 may be determined e.g. based on data concerning calving of the animal 100 (i.e. passed number of days since calving), which data may be obtained from the database 140, in some embodiments.

**Step 304** comprises comparing the determined 302 BCS 230 of the identified 301 animal 100 with a reference value 220 corresponding to the defined 303 position 210 in the lactation cycle 200. The reference value 220 may be corresponding to BCS of an ideal animal, in some embodiments.

**Step 305,** which only may be performed in some particular embodiments, comprises computing a change rate between comparisons 304 made at different moments in time, in relation to the reference value 220.

By iterating measurements and also determining the change rate between the made comparisons 304, a tendency of the animal 100 to aggravate (or eliminate) the BCS value in comparison with the reference value 220 may assist in taking a correct decision early, to change feed group 101, 102.

**Step 306,** which only may be performed in some particular embodiments, comprises obtaining information associated with rank of the animal 100, and decreasing a first margin 240 when the animal 100 is determined to be low-ranked based on the obtained information. In some embodiments, the first margin 240 may be decreased into non-existence in some embodiments, or even set to a negative value.

**Step 307** comprises confirming that the animal 100 is able to assimilate the feed and is kept in the correct feeding group 101 when the determined 302 BCS 230 of the animal 100 is within an interval, defined by the reference value 220 minus a first margin 240 and the reference value 220 in addition to a second margin 250.

Thereby, as long as the BCS 230 of the animal 100 is determined 302 to be within the interval created between the reference value 220 minus the first margin 240, and the reference value 220 in addition to the second margin 250, the farmer is assured that the animal 100 is maintained in the right feeding group 101 and that the animal 100 is able to assimilate the feed it is given. Thereby, the farmer may relax (concerning the animal 100 in question) and focus his/ her efforts on other worries, i.e. nutritional achievements of other animals at the farm.

**Step 308** comprises deciding to let the animal 100 change feeding group 101, 102, to a feeding group provided with feed having a higher energy content than the feed of the first feeding group 101, when the determined BCS 230 of the animal 100 is lower than the reference value 220 minus the first margin 240; or to put the animal 100 in a feeding group provided with feed having a lower energy content than the first feeding group 101, when the determined 302 BCS 230 of the animal 100 is higher than the reference value 220 in addition to the second margin 250.

In some embodiments, it may be decided to let the animal 100 change feeding group 101, 102 when a plurality of animals 100 has been decided to change feeding group 101, 102 into the decided feeding group. It may thereby be avoided that a singular animal is introduced into a new feed group alone, as social dynamics in a cattle society may lead to emotional abuse, general harassment and/ or malevolent actions to force the newly introduced animal out of the feeding areas of the feed group, leading to decreased BCS, or maintained low BCS of the animal.

The decision to let the animal 100 change feeding group 101, 102 may be based on comparisons 304, made at different moments in time. The comparisons may be made at different moments in time during a number of consecutive days, such as e.g. five days, a week, etc.

By making a plurality of measurements of the animal BCS and compare the BCS with the respective reference value 220, a more reliable decision concerning the feed group placing may be made, in comparison with a singular measurement value.

The decision to let the animal 100 change feeding group 101, 102 may, in some embodiments wherein step 305 has been performed, be based on the computed change rate between the comparisons 304 at different moments in time.

**Step 309,** which only may be performed in some particular embodiments wherein the feed of the first feeding group 101 comprises PMR, comprises providing additional high nutrient value food to the identified 301 animal 100 when the determined 302 BCS 230 of the animal 100 is lower than the reference value 220 minus the first margin 240; or reducing high nutrient value food provided to the identified 301 animal 100 when the determined 302 BCS 230 of the animal 100 is higher than the reference value 220 in addition to the second margin 250.

In some embodiments, the provided or reduced high nutrient value food may be adjusted less than 5% of the originally scheduled amount of high nutrient value food. In case more high nutrient value food needs to be adjusted, an alert may be generated to a farmer, nutritionist, etc.

Thereby, radical nutrient changes of the animal 100, without analyses of a competent human is avoided.

**Step 310,** which only may be performed in some particular embodiments, comprises notifying a group feeding manager, when it has been decided to let the animal 100 change feeding group 101, 102.

**Step 311,** which only may be performed in some particular embodiments, comprises adjusting temperature in a barn area housing the first feeding group 101, based on determined BCS 230 of a plurality of animals 100 of the first feeding group 101. Thus, the temperature may be reduced, e.g. to a temperature below 21 degrees Celsius, for avoiding heat stress of the animals which are kept in the barn area.

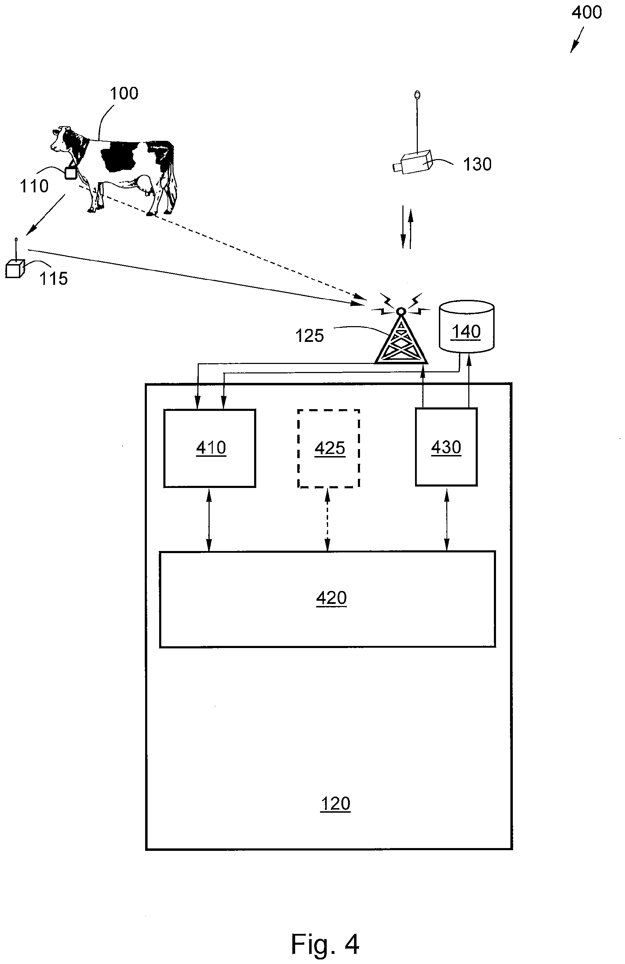

**Figure 4** illustrates an embodiment of a system **400** to group feed animals 100 in a herd where the animals 100 are kept in different feeding groups 101, 102 based on an estimated energy need of the animals 100, and where each respective feeding group 101, 102 is provided with feed having different energy content.

The provided feed may comprise TMR in some embodiments. In other embodiments, the provided feed may comprise PMR.

The system 400 comprises a control unit 120. The control unit 120 is configured to perform at least some of the previously described steps 301-311 according to the method 300 described above and illustrated in Figure 3. The control unit 120 is thereby configured to identify an animal 100 in a first feeding group 101. Further, the control unit 120 is configured to also determine BCS 230 of the identified animal 100. The control unit 120 is furthermore configured to define a position 210, in a lactation cycle 200, of the identified animal 100. In addition, the control unit 120 is configured to compare the determined BCS 230 of the identified animal 100 with a reference value 220 corresponding to the defined position 210 in the lactation cycle 200. Also, the control unit 120 is further configured to confirm that the animal 100 is able to assimilate the feed and is kept in the correct feeding group 101 when the determined BCS 230 of the animal 100 is within an interval, defined by the reference value 220 minus a first margin 240 and the reference value 220 in addition to a second margin 250.

In some embodiments, the control unit 120 may be further configured to decide to let the animal 100 change feeding group 101, 102, to a feeding group provided with feed having a higher energy content than the feed of the first feeding group 101, when the determined BCS 230 of the animal 100 is lower than the reference value 220 minus the first margin 240; or to put the animal 100 in a feeding group provided with feed having a lower energy content than the first feeding group 101, when the determined BCS 230 of the animal 100 is higher than the reference value 220 in addition to the second margin 250.

In some embodiments, the control unit 120 may be further configured to let the animal 100 change feeding group 101, 102 when a plurality of animals 100 has been decided to change feeding group 101, 102 into the decided feeding group.

The control unit 120 may also be configured to perform multiple comparisons made at different moments in time; and decide to let the animal 100 change feeding group 101, 102, based on the performed multiple comparisons. These multiple comparisons may be made at different moments in time during a number of consecutive days, such as e.g. five days, seven days, ten days, etc.

In some alternative embodiments, wherein multiple measurements and comparisons have been made, the control unit 120 may also be configured to compute a change rate between the comparisons at different moments in time, in relation to the reference value 220; and the decision to let the animal 100 change feeding group 101, 102 may be based on the computed change rate.

In embodiments, wherein the provided feed comprises PMR, the control unit 120 may furthermore also be configured to provide additional high nutrient value food to the identified animal 100 when the determined BCS 230 of the animal 100 is lower than the reference value 220 minus the first margin 240; or reducing high nutrient value food provided to the identified animal 100 when the determined BCS 230 of the animal 100 is higher than the reference value 220 in addition to the second margin 250.

In yet some alternative embodiments, the control unit 120 may be configured to provide, or reduce, high nutrient value food by a limit value such as e.g. less than 5% of the originally scheduled amount of high nutrient value food. In case it is required to adjust the amount of high nutrient value food by more than 5%, an alert may be generated and provided to farmer/ nutrient. Thereby it may be assured that the nutrient value of an animal 100 is not changed too radically without notification or supervision by a competent and responsible human.

The control unit 120 may furthermore be configured to notify a group feeding manager, when it has been decided to let the animal 100 change feeding group 101, 102. Thereby, the group feeding manager/ farmer may assist the animal 100 during the feed group change process, confirming that the feed group change (by visual inspection of the animal 100). Thereby, hasty or incorrect changes may be avoided.

However, in other embodiments, the control unit 120 may be configured to implement the determined feed group change by generating and providing a command to a gate between the feed groups 101, 102, for forcing the animal 100 to enter the other feed group 102. The gate may be situated e.g. after milking in a rotary platform for milking, or other milking device, where the animal 100 is identified. The feed group change may thereby be smoothly effectuated without involving human interaction, in some embodiments.

In some further alternative embodiments, the control unit 120 may be configured to obtain information associated with rank of the animal 100. A value indicating the rank may be stored e.g. in the database 140. Such information concerning rank may be estimated and entered manually by the farmer in some embodiments. In other embodiments, rank may be determined e.g. by measuring a time period the animal 100 has to wait in a waiting room before milking, or by detecting certain behavioural patterns of the animal 100 indicating submissive character.

In some embodiments, the control unit 120 may be configured to decrease the first margin 240 when the animal 100 is determined to be low-ranked, based on the obtained information. The problem for a low-ranked animal 100 is that more dominant animals pushes away the low-ranked animal 100 from the feeding area, leading to a low BCS of the low-ranked animal 100. By detecting the low-ranked animal 100 and decrease the first margin 240, the determination to change feed group 101, 102 is made earlier for the low-ranked animal 100. In some embodiments, the control unit 120 may be configured to determine to let the low ranked animal 100 change feed group 101, 102 into a low-rank animal feed group.

In some embodiments, the control unit 120 may furthermore be configured to adjust temperature in an area housing the first feeding group 101, based on determined BCS 230 of a plurality of animals 100 of the first feeding group 101. In case the temperature is too high, e.g. exceeding 21 degrees Celsius or there about, animals may start suffering from heat stress and may not be able to eat or assimilate the feed.

The control unit 120 may thus generate and provide a control signal to a temperature regulating structure such as e.g. a heating installation; fan; cooling unit, etc., for adjusting, i.e. decreasing the temperature when the measured temperature exceeds a threshold limit such as e.g. 21 degrees Celsius. In some alternative embodiments, an alert may be generated and sent to the farmer, encouraging him/ her to decrease the temperature of the discussed section of the barn.

When it is detected that the plurality of animals 100 of the first feeding group 101, have a respective BCS 230 lower than the corresponding reference value 220, the temperature may be decreased in the part of the barn dedicated to the first feeding group 101. Thereby heat stress of the animal 100 may be avoided, leading to that she may assimilate the feed in a convenient way.

In some embodiments, a temperature measurement may be made of ambient temperature and a check may be made, by comparison, if the temperature of the part of the barn dedicated to the first feeding group 101 is exceeding the ambient temperature. In case this is true, a ventilation may be made by opening windows or similar arrangements. Thereby electricity may be saved, in comparison with activating fans or air conditioner.

The system 400 furthermore comprises an identification unit 110 comprising a unique identification of the animal 100. The identification unit 110 may e.g. comprise a transponder such as RFID, carried by the animal 100 in some embodiments.

The system 400 also, in addition comprises a camera 130, configured to capture an image and send the captured image to the control unit 120.

In some alternative embodiments, the system 400 further comprises a temperature regulating structure, for adjusting the temperature in different parts of the barn.

The system 400 may also comprise a gate, and a mechanism for governing the gate, based on command signals obtained from the control unit 120. It may thereby be possible to select a certain animal 100 and divide it from the current feeding group 101, 102.

Further, the system 400 also may comprise a plurality of feeding groups 101, 102, and corresponding respective dedicated parts of the barn or pasture fields wherein the feeding groups 101, 102 are kept.

The system 400 also may comprise a portable communication unit, configured to output information to the farmer, such as e.g. a cellular telephone or similar communication device.

The system 400 may in some embodiments also comprise a database 140, configured to store animal identification related parameters, and/ or animal status related parameters.

The control unit 120 may comprise a receiver **410** configured to receive information from the transceiver 125, from the identification unit 110, from the reader 115, from the camera 130 and/ or from the database 140.

The control unit 120 also comprises a processing circuit **420** configured for performing various calculations for conducting the method 300 according to at least some of the previously described steps 301-311.

Such processing circuit 420 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the control unit 120 may comprise a memory **425** in some embodiments. The optional memory 425 may comprise a physical device utilised to store data or programs, i.e., sequences of instructions, on a temporary or permanent basis. According to some embodiments, the memory 425 may comprise integrated circuits comprising silicon-based transistors. The memory 425 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Further, the control unit 120 may comprise a signal transmitter **430.** The signal transmitter 430 may be configured for transmitting signals via a wired or wireless communication interface to the transceiver 125 and/ or the database 140.

However, in some alternative embodiments, the system 400 may comprise additional units for performing the method 300 according to steps 301-311.

The above described steps 301-311 to be performed in the control unit 120 may be implemented through the one or more processing circuits 420 within the control unit 120, together with a computer program for performing at least some of the functions of the steps 301-311. Thus, the computer program comprises instructions which, when the computer program is executed by the control unit 120 in the system 400, cause the control unit 120 to carry out the method 300 according to at least some of steps 301-311.

The computer program mentioned above may be provided for instance in the form of a computer-readable medium, i.e. a data carrier carrying computer program code for performing at least some of the steps 301-311 according to some embodiments when being loaded into the one or more processing circuits 420 of the control unit 120. The data carrier may be, e.g., a hard disk, a CD ROM disc, a memory stick, an optical storage device, a magnetic storage device or any other appropriate medium such as a disk or tape that may hold machine readable data in a non-transitory manner. The computer program may furthermore be provided as computer program code on a server and downloaded to the control unit 120 remotely, e.g. over an Internet or an intranet connection.

The terminology used in the description of the embodiments as illustrated in the accompanying drawings is not intended to be limiting of the described method 300; the control unit 120; the computer program; the system 400 and/ or the computer-readable medium. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures or features are recited in mutually different dependent claims, illustrated in different figures or discussed in conjunction with different embodiments does not indicate that a combination of these measures or features cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A control unit (120) configured to group feed animals (100) in a herd where the animals (100) are kept in different feeding groups (101, 102) based on an estimated energy need of the animals (100), and where each respective feeding group (101, 102) is provided with feed having different energy content; wherein the control unit (120) is configured to:
identify an animal (100) in a first feeding group (101);
determine Body Condition Score, BCS, (230) of the identified animal (100); **characterized in that** the control unit (120) is configured to:
define a position (210), in a lactation cycle (200), of the identified animal (100);
compare the determined BCS (230) of the identified animal (100) with a reference value (220) corresponding to the defined position (210) in the lactation cycle (200); and
confirm that the animal (100) is able to assimilate the feed and is kept in the correct feeding group (101) when the determined BCS (230) of the animal (100) is within an interval, defined by the reference value (220) minus a first margin (240) and the reference value (220) in addition to a second margin (250).

2. The control unit (120) according to claim 1, configured to:
decide to let the animal (100) change feeding group (101, 102), to a feeding group provided with feed having a higher energy content than the feed of the first feeding group (101), when the determined BCS (230) of the animal (100) is lower than the reference value (220) minus the first margin (240); or to put the animal (100) in a feeding group provided with feed having a lower energy content than the first feeding group (101), when the determined BCS (230) of the animal (100) is higher than the reference value (220) in addition to the second margin (250).

3. The control unit (120) according to claim 2, configured to let the animal (100) change feeding group (101, 102) when a plurality of animals (100) has been decided to change feeding group (101, 102) into the decided feeding group.

4. The control unit (120) according to any of claims 1-3, configured to perform comparisons made at different moments in time; and confirm that the animal (100) assimilates the feed and is kept in the correct feeding group (101) or decide to let the animal (100) change feeding group (101, 102), based on the performed comparisons.

5. The control unit (120) according to claim 4, wherein the comparisons are made at different moments in time during a number of consecutive days.

6. The control unit (120) according to any of claims 4-5, configured to compute a change rate between the comparisons at different moments in time, in relation to the reference value (220); and wherein the decision to let the animal (100) change feeding group (101, 102) is based on the computed change rate.

7. The control unit (120) according to any of claims 1-6, wherein the feed of the respective feeding groups (101, 102) comprises Total Mixed Ration, TMR.

8. The control unit (120) according to any of claims 1-6, wherein the feed of the first feeding group (101) comprises Partially Mixed Ration, PMR, and wherein the control unit (120) is configured to:
provide additional high nutrient value food to the identified animal (100) when the determined BCS (230) of the animal (100) is lower than the reference value (220) minus the first margin (240); or reducing high nutrient value food provided to the identified animal (100) when the determined BCS (230) of the animal (100) is higher than the reference value (220) in addition to the second margin (250).

9. The control unit (120) according to claim 8, configured to: provide, or reduce, the high nutrient value food by less than 5% of the originally scheduled amount of high nutrient value food.

10. The control unit (120) according to any of claims 1-9, configured to notify a group feeding manager, when it has been confirmed that the animal (100) assimilates the feed and is kept in the correct feeding group (101) or it has been decided to let the animal (100) change feeding group (101, 102).

11. The control unit (120) according to any of claims 1-10, configured to obtain information associated with rank of the animal (100), and to decrease the first margin (240) when the animal (100) is determined to be low-ranked based on the obtained information.

12. The control unit (120) according to any of claims 1-11, configured to adjust temperature in an area housing the first feeding group (101), based on determined BCS (230) of a plurality of animals (100) of the first feeding group (101).

13. A system (400) to group feed animals (100) in a herd where the animals (100) are kept in different feeding groups (101, 102) based on an estimated energy need of the animals (100), and where each respective feeding group (101, 102) is provided with feed having different energy content; wherein the system (400) comprises:
a control unit (120) according to any of claims 1-12;
an identification unit (110) comprising a unique identification of the animal (100); and
a camera (130), configured to capture an image and send the captured image to the control unit (120).

14. The system (400) according to claim 13, comprising a plurality of feeding group areas.

## Patentansprüche

1. Steuereinheit (120), die konfiguriert ist, um Tiere (100) in einer Herde in Gruppen zu füttern, wobei die Tiere (100) in unterschiedlichen Fütterungsgruppen (101, 102) basierend auf einem geschätzten Energiebedarf der Tiere (100) gehalten werden und wobei jede jeweilige Fütterungsgruppe (101, 102) mit Futter versehen ist, das einen unterschiedlichen Energiegehalt aufweist; wobei die Steuereinheit (120) zu Folgendem konfiguriert ist:
Identifizieren eines Tieres (100) in einer ersten Fütterungsgruppe (101);
Ermitteln der Körperkonditionsbeurteilung *(Body Condition Score* - BCS) (230) des identifizierten Tieres (100);
**dadurch gekennzeichnet, dass** die Steuereinheit (120) zu Folgendem konfiguriert ist:
Definieren einer Position (210), in einem Laktationszyklus (200), des identifizierten Tieres (100);
Vergleichen der ermittelten BCS (230) des identifizierten Tieres (100) mit einem Referenzwert (220), der der definierten Position (210) in dem Laktationszyklus (200) entspricht; und
Bestätigen, dass das Tier (100) in der Lage ist, das Futter zu assimilieren, und in der richtigen Fütterungsgruppe (101) gehalten wird, wenn die ermittelte BCS (230) des Tieres (100) innerhalb eines Intervalls, das durch den Referenzwert (220) abzüglich einer ersten Marge (240) und den Referenzwert (220) zuzüglich der zweiten Marge (250) definiert ist, liegt.

2. Steuereinheit (120) nach Anspruch 1, die zu Folgendem konfiguriert ist:
Entscheiden, das Tier (100) von der Fütterungsgruppe (101, 102) in eine Fütterungsgruppe wechseln zu lassen, die mit Futter versehen ist, das einen höheren Energiegehalt als das Futter der ersten Fütterungsgruppe (101) aufweist, wenn die ermittelte BCS (230) des Tieres (100) niedriger als der Referenzwert (220) abzüglich der ersten Marge (240) ist; oder das Tier (100) in eine Fütterungsgruppe zu setzen, die mit Futter versehen ist, das einen niedrigeren Energiegehalt als die erste Fütterungsgruppe (101) aufweist, wenn die ermittelte BCS (230) des Tieres (100) höher als der Referenzwert (220) zuzüglich einer zweiten Marge (250) ist.

3. Steuereinheit (120) nach Anspruch 2, die konfiguriert ist, um das Tier (100) die Fütterungsgruppe (101, 102) wechseln zu lassen, wenn entschieden wurde, dass mehrere Tiere (100) von der Fütterungsgruppe (101, 102) in die entschiedene Fütterungsgruppe wechseln.

4. Steuereinheit (120) nach einem der Ansprüche 1-3, die konfiguriert ist, um Vergleiche durchzuführen, die zu unterschiedlichen Zeitpunkten angestellt werden; und basierend auf den durchgeführten Vergleichen zu bestätigen, dass das Tier (100) das Futter assimiliert und in der richtigen Fütterungsgruppe (101) gehalten wird, oder zu entscheiden, das Tier (100) die Fütterungsgruppe (101, 102) wechseln zu lassen.

5. Steuereinheit (120) nach Anspruch 4, wobei die Vergleiche zu unterschiedlichen Zeitpunkten während einer Anzahl aufeinanderfolgender Tage angestellt werden.

6. Steuereinheit (120) nach einem der Ansprüche 4-5, die konfiguriert ist, um eine Änderungsrate zwischen den Vergleichen zu unterschiedlichen Zeitpunkten in Bezug auf den Referenzwert (220) zu berechnen; und wobei die Entscheidung, das Tier (100) die Fütterungsgruppe (101, 102) wechseln zu lassen, auf der berechneten Änderungsrate basiert.

7. Steuereinheit (120) nach einem der Ansprüche 1-6, wobei das Futter der jeweiligen Fütterungsgruppen (101, 102) eine Totale Mischration (TMR) umfasst.

8. Steuereinheit (120) nach einem der Ansprüche 1-6, wobei das Futter der ersten Fütterungsgruppe (101) eine Partielle Mischration (PMR) umfasst und wobei die Steuereinheit (120) zu Folgendem konfiguriert ist:
Bereitstellen von zusätzlichem Futter mit hohem Nährwert an das identifizierte Tier (100), wenn die ermittelte BCS (230) des Tieres (100) niedriger als der Referenzwert (220) abzüglich der ersten Marge (240) ist; oder Reduzieren der Nahrung mit hohem Nährwert, die dem identifizierten Tier (100) bereitgestellt wird, wenn die ermittelte BCS (230) des Tieres (100) höher als der Referenzwert (220) zuzüglich der zweiten Marge (250) ist.

9. Steuereinheit (120) nach Anspruch 8, die zu Folgendem konfiguriert ist: Bereitstellen oder Reduzieren der Nahrung mit hohem Nährwert um weniger als 5 % der ursprünglich geplanten Menge an Nahrung mit hohem Nährwert.

10. Steuereinheit (120) nach einem der Ansprüche 1-9, die konfiguriert ist, um einen Gruppenfütterungsverwalter zu benachrichtigen, wenn bestätigt wurde, dass das Tier (100) das Futter assimiliert und in der richtigen Fütterungsgruppe (101) gehalten wird, oder entschieden wurde, das Tier (100) die Fütterungsgruppe (101, 102) wechseln zu lassen.

11. Steuereinheit (120) nach einem der Ansprüche 1-10, die konfiguriert ist, um Informationen zu erhalten, die mit dem Rang des Tieres (100) verknüpft sind, und um die ersten Marge (240) zu verringern, wenn basierend auf den erhaltenen Informationen ermittelt wird, dass das Tier (100) niederrangig ist.

12. Steuereinheit (120) nach einem der Ansprüche 1-11, die konfiguriert ist, um die Temperatur in einem Bereich, in dem die erste Fütterungsgruppe (101) untergebracht ist, basierend auf der bestimmten BCS (230) mehrerer Tiere (100) der ersten Fütterungsgruppe (101) anzupassen.

13. System (400), um Tiere (100) in einer Herde in Gruppen zu füttern, wobei die Tiere (100) in unterschiedlichen Fütterungsgruppen (101, 102) basierend auf einem geschätzten Energiebedarf der Tiere (100) gehalten werden und wobei jede jeweilige Fütterungsgruppe (101, 102) mit Futter versehen ist, das einen unterschiedlichen Energiegehalt aufweist; wobei das System (400) Folgendes umfasst:
eine Steuereinheit (120) nach einem der Ansprüche 1-12;
eine Identifikationseinheit (110), die eine eindeutige Identifikation des Tieres (100) umfasst; und
eine Kamera (130), die konfiguriert ist, um ein Bild aufzunehmen und das aufgenommene Bild an die Steuereinheit (120) zu senden.

14. System (400) nach Anspruch 13, das mehrere Fütterungsgruppenbereiche umfasst.

## Revendications

1. Unité de commande (120) configurée pour regrouper les animaux d'alimentation (100) dans un troupeau où les animaux (100) sont gardés dans différents groupes d'alimentation (101, 102) sur la base d'un besoin énergétique estimé des animaux (100), et où chaque groupe d'alimentation respectif (101, 102) est pourvu d'une alimentation ayant un contenu énergétique différent ;
l'unité de commande (120) étant configurée pour :
identifier un animal (100) dans un premier groupe d'alimentation (101) ;
déterminer la note d'état corporel, NEC, (230) de l'animal identifié (100) ;
**caractérisé en ce que** l'unité de commande (120) est configurée pour :
définir une position (210), dans un cycle de lactation (200), de l'animal identifié (100) ; comparer la NEC déterminée (230) de l'animal identifié (100) avec une valeur de référence (220) correspondant à la position définie (210) dans le cycle de lactation (200) ; et
confirmer que l'animal (100) est capable d'assimiler l'aliment et est maintenu dans le groupe d'alimentation approprié (101) lorsque la NEC déterminée (230) de l'animal (100) se situe dans un intervalle, défini par la valeur de référence (220) moins une première marge (240) et la valeur de référence (220) additionnée à une seconde marge (250).

2. Unité de commande (120) selon la revendication 1, configurée pour :
décider de laisser l'animal (100) changer de groupe d'alimentation (101, 102), vers un groupe d'alimentation pourvu d'une alimentation ayant une teneur énergétique plus élevée que l'alimentation du premier groupe d'alimentation (101), lorsque la NEC déterminée (230) de l'animal (100) est inférieure à la valeur de référence (220) moins la première marge (240) ; ou placer l'animal (100) dans un groupe d'alimentation pourvu d'un aliment ayant une teneur énergétique inférieure à celle du premier groupe d'alimentation (101), lorsque la NEC déterminée (230) de l'animal (100) est supérieure à la valeur de référence (220) additionnée à la seconde marge (250).

3. Unité de commande (120) selon la revendication 2, configurée pour laisser l'animal (100) changer de groupe d'alimentation (101, 102) lorsqu'il a été décidé de changer le groupe d'alimentation (101, 102) d'une pluralité d'animaux (100) pour le groupe d'alimentation décidé.

4. Unité de commande (120) selon l'une quelconque des revendications 1 à 3, configurée pour effectuer des comparaisons réalisées à différents moments dans le temps ; et
confirmer que l'animal (100) assimile l'aliment et est maintenu dans le groupe d'alimentation approprié (101) ou décider de laisser l'animal (100) changer de groupe d'alimentation (101, 102), sur la base des comparaisons effectuées.

5. Unité de commande (120) selon la revendication 4, les comparaisons étant réalisées à différents moments dans le temps pendant un certain nombre de jours consécutifs.

6. Unité de commande (120) selon l'une quelconque des revendications 4 à 5, configurée pour calculer un taux de changement entre les comparaisons à différents moments dans le temps, par rapport à la valeur de référence (220) ; et la décision de laisser l'animal (100) changer de groupe d'alimentation (101, 102) étant basée sur le taux de changement calculé.

7. Unité de commande (120) selon l'une quelconque des revendications 1 à 6, l'alimentation des groupes d'alimentation respectifs (101, 102) comprenant la ration totale mélangée, RTM.

8. Unité de commande (120) selon l'une quelconque des revendications 1 à 6, l'alimentation du premier groupe d'alimentation (101) comprenant une ration partiellement mélangée, RPM, et l'unité de commande (120) étant configurée pour :
fournir un aliment supplémentaire à haute valeur nutritive à l'animal identifié (100) lorsque la NEC déterminée (230) de l'animal (100) est inférieure à la valeur de référence (220) moins la première marge (240) ; ou réduire les aliments à haute valeur nutritive fournis à l'animal identifié (100) lorsque la NEC déterminée (230) de l'animal (100) est supérieure à la valeur de référence (220) additionnée à la seconde marge (250).

9. Unité de commande (120) selon la revendication 8, configurée pour : fournir, ou réduire, les aliments à haute valeur nutritive de moins de 5 % de la quantité initialement prévue d'aliments à haute valeur nutritive.

10. Unité de commande (120) selon l'une quelconque des revendications 1 à 9, configurée pour avertir un gestionnaire d'alimentation de groupe, lorsqu'il a été confirmé que l'animal (100) assimile l'aliment et est maintenu dans le groupe d'alimentation approprié (101) ou il a été décidé de laisser l'animal (100) changer de groupe d'alimentation (101, 102).

11. Unité de commande (120) selon l'une quelconque des revendications 1 à 10, configurée pour obtenir des informations associées au rang de l'animal (100), et pour diminuer la première marge (240) lorsqu'il est déterminé que la cote de l'animal (100) est basse sur la base des informations obtenues.

12. Unité de commande (120) selon l'une quelconque des revendications 1 à 11, configurée pour régler la température dans une zone abritant le premier groupe d'alimentation (101), sur la base de la NEC déterminée (230) d'une pluralité d'animaux (100) du premier groupe d'alimentation (101).

13. Système (400) pour regrouper les animaux d'alimentation (100) dans un troupeau où les animaux (100) sont maintenus dans différents groupes d'alimentation (101, 102) sur la base d'un besoin énergétique estimé des animaux (100), et où chaque groupe d'alimentation respectif (101, 102) est pourvu d'une alimentation ayant une teneur énergétique différente ;
le système (400) comprenant :
une unité de commande (120) selon l'une quelconque des revendications 1 à 12 ;
une unité d'identification (110) comprenant une identification unique de l'animal (100) ; et
une caméra (130), configurée pour capturer une image et envoyer l'image capturée à l'unité de commande (120).

14. Système (400) selon la revendication 13, comprenant une pluralité de zones de groupe d'alimentation.
